# EUROPEAN PATENT SPECIFICATION

(11) **EP 1 750 341 B1**
(45) Date of publication and mention of the grant of the patent: **13.08.2008**
(21) Application number: 05425578.1
(22) Date of filing: 04.08.2005
(51) Int. Cl.: H02G 5/04

(54) **Prefabricated leaktight duct member for the distribution of electrical power and related method of manufacture**
Vorgefertigtes und wasserdichtes Kanalelement für eine elektrische Energieverteilung und Verfahren zur dessen Herstellung
Elément préfabriqué et étanche de goulotte pour la distribution de puissance électrique et sa méthode de fabrication

(43) Date of publication of application: 07.02.2007
(73) Proprietor: BTICINO S.P.A., 20154 Milano (IT)
(72) Inventor: Fabrizi, Fabrizio, 24100 Bergamo (IT)
(74) Representative: Simino, Massimo

(56) References cited:
- EP-A- 0 652 609
- EP-A- 1 049 227
- US-A- 2 464 964
- US-A- 3 771 103

## Description

This invention relates to a leaktight prefabricated duct member for the distribution of electrical power and a related method of manufacture.

It is known that prefabricated duct members, currently referred to as sheathed bars or bus ducts, for the distribution of electrical power in buildings, in particular for industrial use or for offices, stores, shopping centres and the like, comprise members of standard lengths, for example 1, 2, 3 metres, which can be connected at their ends to obtain the longitudinal length required for each specific application. Electrical connections to power user equipment can be made at any point along their length.

These prefabricated components must satisfy many requirements: in addition to the ability to carry high currents, of the order of tens of amperes (typically 25 to 40 A), they must ensure maximum safety when work is carried out subsequent to their installation and in many types of installations, such as for example underfloor installations known as "embedded" installations, or in false ceilings and wherever there is a risk of possible seepage of water, they must be impervious to liquids, that is they must be leaktight.

Although the requirement for safety during work by an operator (or "finger test requirement") can be satisfied by relatively simple and economic means, such as are for example described in European patent application EP 1049227 by the same applicant, the requirement that the equipment should be leaktight has hitherto been satisfied by particularly complex and costly arrangements which make both installation and subsequent adjustments to the system, such as the provision of new offtakes, the removal of existing offtakes and extension of the system, particularly difficult and laborious.

This invention avoids these disadvantages and provides an extremely simple structure which can be manufactured economically in large volumes and satisfies the requirements already indicated.

According to the invention these results are achieved through a prefabricated duct member structure and corresponding method of manufacture as defined in the appended claims.

Before the present invention some attempt has been made to overcome the above mentioned disadvantages:

US 2,464,964 discloses a prefabricated bus duct consisting in a support of insulating material forming a plurality of rectilinear slots open onto one side of the support, each slot housing a conducting bar, slidably inserted in the slot from an end thereof.

The slots are closed by a hood of insulating material, fixed to the support by means of screws.

In facing relation with the slots opening the hood has continuous weakening grooves which can be locally perforated, by a knife or screwdriver tip, to form a kind of connection socket wherever desired.

The hood ensures protection against unintentional contact with the conducting bars, but does not seal hermetically the slots, so that the bus duct is not leaktight.

US 3,771,103 proposes a similar arrangement where conducting bars are press fitted in the slots and the hood is replaced by a pierceable insulating layer glued or welded, at its longitudinal edges, to the insulating support, once the conductive bars have been press fitted into the slots.

Although this arrangement provides hermetical sealing of the slot set, the slot are not individually sealed and the layer is prone to possible tearing when pins of a connection plug are forced through the layer to establish contact with the conducting bars.

The features and advantages of this invention will be more particularly apparent from the following description of a preferred embodiment and some of its variants with reference to the appended drawings in which:
- Figure 1 is a perspective view of a preferred embodiment of the leaktight prefabricated duct member for the distribution of electrical power with currents of the order of tens of amperes,
- Figure 2 is a magnified transverse cross-section of a component of the duct member in Figure 1,
- Figure 3 is a perspective view of a variant of the prefabricated duct member in Figure 1 for the distribution of relatively low emergency power supplies, for example up to 16A.
- Figure 4 is a magnified transverse cross-section of the duct member in Figure 3,
- Figure 5 is a diagrammatical view of the conductor member in Figure 1, from above, with reference to the view in that figure,
- Figure 6 is a transverse cross-section of a variant of the conductor member in Figures 1 and 2 especially designed for the construction of electrified skirting boards,
- Figure 7 is a diagrammatical front view of an electrical connector which is to be connected and used in a leaktight manner with a prefabricated member such as that in Figures 1 and 2,
- Figure 8 shows the connector in Figure 7 hooked to the prefabricated member in Figures 1 and 2, modified to ensure that the connector is engaged with the prefabricated member in a univocal position,
- Figure 9 is a perspective view of a leaktight end cap for the prefabricated members in Figures 1, 2, 3 and 4,
- Figure 10 is a frontal view, with reference to the view in Figure 1, in partial cross-section, of a leaktight end connector for a butt joint between two prefabricated members such as those in Figures 1 and 2.

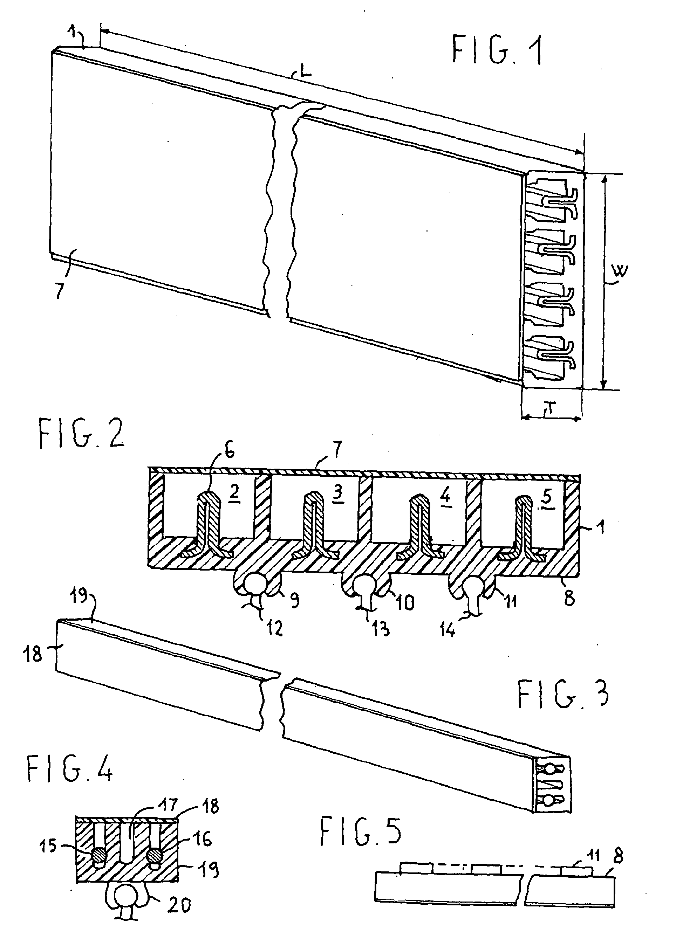

With reference to Figures 1 and 2 a prefabricated member according to the invention comprises a supporting bar 1 of insulating material, preferably of rigid PVC, obtained by extrusion and having a rectangular transverse cross-section having a width W of indicatively 40-50 mm and a thickness T of indicatively 10-20 mm.

Four slots 2, 3, 4, 5 of rectangular cross-section, which open towards one side of bar 1, are formed in bar 1 by means of the same extrusion process.

A continuous conducting bar 6, of copper or aluminium, having a T-shaped cross-section, is housed in each of the slots.

Advantageously the conducting bars such as 6 are obtained by bending a conducting plate in a rolling mill and are inserted into bar 1 through a coextrusion process in such a way that the flanges of the conducting bars are embedded in the insulating material of bar 1.

In this way the conducting bars are made of one piece with supporting bar 1. Advantageously the same mill can cut a single strip into several plates, as many as there are bars which have to be formed, using roller cutters.

Again in the course of the coextrusion process or immediately afterwards when the insulating material is still hot, a continuous strip 7 of insulating material, for example plasticised PVC, which is therefore relatively soft and yielding, is applied to the surface of the supporting bar 1, onto which the slots open, becoming heat bonded to bar 1, hermetically and individually sealing each of the slots 2-5.

Insulating sheet 7 may have a thickness of the order of 0.4-0.6 mm and is spaced apart by conducting bars 6.

In addition to ensuring that the slots are leaktight (except at their ends), insulating sheet 7 intrinsically provides "finger test" electrical protection with a dielectric strength of the order of a few KV and at the same time can easily be perforated by metal points or blades designed to come into contact with the conducting bars.

Any edges from the perforation of sheet 7, which as mentioned is well spaced out by the conducting bars (by a number of millimetres), find ample housing in slots 2-5 and do not hamper or prejudice the quality of the electrical contact, which may extend over a contact surface area of the order of a number of mm² in such a way as to transfer currents of the order of tens of amperes without overheating and with very low contact resistance.

This is a fundamental difference in comparison with known electrical connection systems obtained by perforating the insulating material, currently used with "flat cables" and other sheathed or coated conductors in which very small (signal) currents flow, and also, in general, relatively low voltages of the order of a few tens of volts or less are present.

Conveniently means for anchoring bar 1 to another mechanical support may be formed using the same material as bar 1 in the course of the process of extruding (or better coextruding) supporting bar 1 and associated conducting bars 6, on the side 8 of the supporting bar opposite that on which spaces 2-5 open.

For example, as illustrated in the cross-section in Figure 3, these means may comprise continuous clamps 9, 10, 11 extending over the entire length of the coextruded and relatively resilient material, into which supporting rails 12, 13, 14 are snap inserted.

The product so obtained from the coextrusion process is cut into desired and standard lengths (e.g. 3 metres) using an automatic cutter.

It is thus obvious that pieces of any desired length shorter than the length of the prefabricated member may be obtained from prefabricated members of this type of standard length, if necessary, using simple portable tools.

Advantageously, for reasons which we shall see, in the course of the cutting process for manufacturing the prefabricated members, anchoring means such as 9, 10, 11 are removed over a certain length by means of a simple milling (or even punching) operation, at least at the extremity of the prefabricated member and possibly over intermediate lengths along the entire length of the prefabricated member, in such a way as to obtain a prefabricated member such as that diagrammatically illustrated in Figure 5.

The snap connection with the supporting rails is made easier in this way. It is clear that the same effect could be obtained using intermittent supporting rails.

Figures 1 and 2 relate to a prefabricated member for the distribution of a three-phase voltage/current system, therefore with three conducting bars for the RST phases plus a fourth conductor for the neutral N.

It is however obvious that the prefabricated member can be provided for the distribution of only single phase voltage/current, with only two conducting bars plus if appropriate an earth bar.

More generally any number of conducting bars may be provided in accordance with the requirements which have to be satisfied.

Figures 3 and 4 show in a perspective view and transverse cross-section respectively a variant embodiment which is particularly suitable for the distribution of an emergency power supply of relatively low current.

In this case insulating support 19, in the form of an extruded bar, has smaller dimensions, indicatively a cross-section of 8 x 10 mm, and only two slots in which two cylindrical conducting bars 15, 16 of small dimensions (for example a diameter of 1.5-1.7 mm) are housed, through a coextrusion process (or even continuous insertion immediately downstream from the extruder).

A third slot 17 has the sole function, in a known way, of rendering the thickness of the extruded material relatively uniform and avoiding the occurrence of internal stresses and consequent deformations.

As in the preceding case the slots are hermetically sealed (except at the extremities of the prefabricated member) by an insulating sheet 18, for example manufactured from plasticised PVC, which is relatively soft, and which is heat bonded to support 19 and well spaced from conductors 15, 16.

In this case too the connection to the conducting bars is made by perforating the insulating sheet with contact pins or blades and the anchorage to an external support is of a snap nature using a clamp 20 identical to those already described.

Obviously these anchoring means are only one of the possible embodiments.

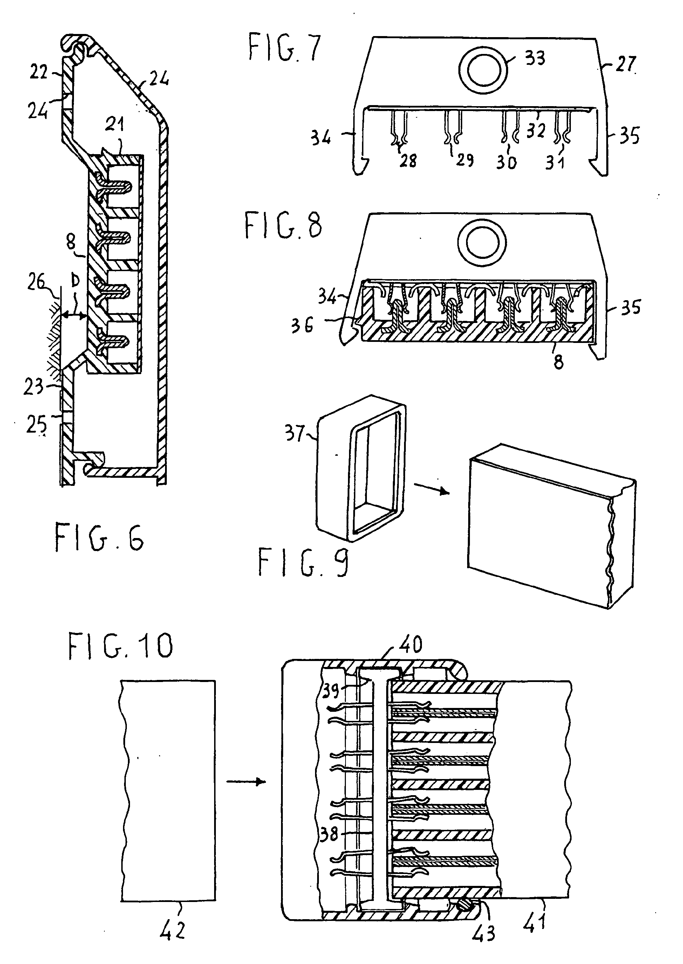

For example Figure 6 shows an embodiment which is particularly indicated for obtaining an electrified skirting board, in transverse cross-section.

In Figure 6 a prefabricated member 21, which is wholly similar to that in Figure 1, is provided with two flanges 22, 23 which extend laterally from wall 8 of supporting bar 1 opposite that onto which the slots open.

Flanges 22, 23 have circular openings or slots 24, 25 (obtained in the process of finishing the prefabricated member or made in the course of installation) for securing the prefabricated member using screws with an expansion plug to a wall 26.

The flanges extend over the full length of the prefabricated member apart from a portion at the extremity thereof (which can be removed by milling during the stage of finishing the prefabricated member).

Flanges 22, 23 ensure that the body 21 of the prefabricated member is attached at a convenient distance D from the wall. This is for reasons which will be more apparent below.

A cap 24 of insulating plastics material, for example of rigid PVC, ABS and the like, which is removably snap fixed to the flanges, provides adequate mechanical protection for the prefabricated member over its entire length.

The various accessories which go to make up a distribution system using the prefabricated member described here will now be considered briefly, because in their innovative aspects they are the subject of other patent applications.

Figure 7 shows a front view of a leaktight connector 27 provided with a plurality of fork metal contacts 28, 29, 30, 31 on its lower surface.

A seal 32 or just a slightly projecting moulding is conveniently located around the group of contacts.

Within the connector, and not illustrated, there are connecting clamps to a multipole electrical cable, the extremity of which can be inserted into the connector through a leaktight union 33.

This type of connector may be used either to connect the prefabricated member to the main supply, or to feed any load through a connection to a live prefabricated member.

For connection to the prefabricated member the connector is provided with two opposing tongues 34, 35, ending in an engaging tooth, which snap onto the body of the prefabricated member.

Advantageously, if necessary, connector 27 may be mechanically "polarised", by providing two tongues of different length.

As illustrated in Figure 8 the tooth of the longer tongue 35 engages the underside 8 of the prefabricated member, while the tooth of shorter tongue 34 engages a rib 36 formed on a side of the prefabricated member, which is also "polarised".

Rib 36, which is obtained in the extrusion process, extends over the entire length of the prefabricated member, except possibly the extremities thereof, where it can be conveniently removed.

When connector 27 is snap fitted onto the prefabricated member fork contacts 28-31 perforate the insulating sheet of the prefabricated member, folding back the edges of the perforation into the slots and making a firm connection to the conducting bars.

In the situation where the electrical connection made in this way has to be removed, in order to ensure that the prefabricated member remains leaktight a connector may be replaced by a similar member without contacts snap inserted onto the prefabricated member, which ensures that the perforations are hermetically sealed. Alternatively a simple adhesive sheet is also sufficient.

As illustrated in Figure 9 another convenient accessory for the prefabricated member comprises a cap 37 for leaktight closure of the extremities of the prefabricated member.

Cap 37, of rubber or plastics (in which case it is conveniently provided with a seal or sealing O-ring), is simply fitted onto the extremity of the prefabricated member, ensuring a hermetic seal.

As illustrated in Figure 9, cap 37 may have a simple rectangular opening if provision is made for the removal of any ribs, such as 36 in Figure 8, from the extremities of the prefabricated member.

Alternatively it may have an opening with a profile which is identical to that of the transverse cross-section of the prefabricated member.

Although a pair of connectors such as those in Figures 7 and 8 may be used to make an electrical connection between two prefabricated members in line with each other, it is preferable to provide a butt connection system for two prefabricated members as illustrated in Figure 10.

The butt connector essentially comprises an insulating plate 38, of plastics material, into which electrical contact forks exposed on the two opposite sides of the plate are inserted.

A moulding 39 projecting from both surfaces of plate 38 and shaped in such a way as to receive the extremity of the prefabricated member ensures correct axial positioning between the extremity connector and the prefabricated members.

As illustrated in the top part of Figure 10, the periphery of insulating plate 38 and corresponding moulding 39 are inserted into a groove formed in the median cross-section of a rubber sleeve 30 which is fitted onto the extremities of two prefabricated members 41, 42 which have to be connected electrically.

As an alternative, as illustrated in the bottom part of Figure 10, sleeve 40 may be manufactured of insulating plastics material, in which case leaktight seals or O-rings 43 which ensure a leaktight connection may conveniently be provided at its extremities.

It is clear that an extremity connector for connecting a prefabricated member such as 41 to a sheathed multipole electrical cable may be provided in a wholly similar way.

It is clear that the connectors in Figures 7, 8 and 10 and the cap in Figure 9 may also be used with the prefabricated member in Figure 6 because provision has been made for placing the body of the prefabricated member in Figure 6 at a distance from the attachment wall.

It is then obvious that cap 24 can be suitably cut and removed so as not to interfere with the connector at the position along the prefabricated member at which a connector such as that in Figures 7, 8 is fixed.

## Claims

1. Leaktight prefabricated duct member for the distribution of electrical power comprising a support (1) of insulating material forming a plurality of rectilinear slots (2, 3, 4, 5) which are parallel to each other and which open onto one side of said support (1), a plurality of conducting bars (6) each housed in one of said slots and fixed to said support (1), a sheet (7) of pierceable insulating material,spaced apart from said bars (6), closing said slots, **characterised in that** said said sheet (7) is heat bonded to the surface of said support (1) onto which said slots open in such a way as to hermetically and individually seal each of said slots (2,3,4,5) over their entire length.

2. Prefabricated member according to claim 1 in which said bars have a T-shaped transverse cross-section and the flanges of said T-shaped cross-section are embedded in said support (1) of insulating material.

3. Prefabricated member according to claims 1 or 2 in which said support is provided with fixing means (9, 10, 11, 22, 23) for fixing said prefabricated member to an external support.

4. Prefabricated member according to claim 3 in which said fixing means comprise at least one resilient clamp (9, 10, 11) formed of one piece with said insulating support (1) on the side of the said support opposite that onto which said slots open for snap connection of said prefabricated member to an external support.

5. Prefabricated member according to claim 3 in which said fixing means comprise a pair of flanges (22, 23) extending laterally with respect to said support (1) for fixing said prefabricated member to an external support (26).

6. Prefabricated member according to claims 3, 4 or 5 in which said fixing means extend over the entire length of said support (1) except for the two extremity portions of said support.

7. Prefabricated member according to claims 2, 3, 4, 5 or 6 in which said conducting bars (6) having a T-shaped cross-section consist in a plate of folded metal material.

8. Method for manufacturing a prefabricated duct member according to any one of the preceding claims, comprising the following stages:
- coextrusion of said support (1) and said conducting bars (6),
- thermal bonding of said sheet of insulating material (7) to the side of said coextruded support (1) onto which said slots open,
- cutting of said coextruded member (1, 6) and said sheet of insulated material (7) firmly attached to said coextruded support into predetermined lengths.

9. Method for the manufacture of a prefabricated duct member according to claim 7, comprising the following stages:
- roller bending of a plurality of plates of metal material, one for each conducting bar, to form said bars,
- coextrusion of said support (1) and said conducting bars (6),
- thermal bonding of said sheet of insulating material (7) to the side of said support (1) onto which said slots open,
- cutting of said coextruded member (1, 6) and said sheath of insulating material (7) thermally bonded to said coextruded support into predetermined lengths,

10. Method according to claim 9 in which said step of roller bending said plurality of plates is preceded by an operation of cutting a single conducting plate using roller cutters in order to obtain said plurality of plates.

## Patentansprüche

1. Wasserfestes, vorgefertigtes Leitungskanalelement für die Verteilung elektrischen Stroms, umfassend eine Stütze (1) aus Isoliermaterial, welche eine Mehrzahl geradliniger Schlitze (2, 3, 4, 5) bildet, die zueinander parallel sind und sich zu einer Fläche der Stütze (1) öffnen, eine Mehrzahl von Leiterschienen (6), welche jeweils in einem der Schlitze aufgenommen und an der Stütze (1) befestigt sind, ein Blatt (7) durchbohrbaren Isoliermaterials, welches zu den Schienen (6) beabstandet ist und die Schlitze schließt, **dadurch gekennzeichnet, dass** das Blatt (7) derart durch Wärmeverbindung mit der Fläche der Stütze (1) verbunden ist, zu der sich die Schlitze öffnen, dass jeder der Schlitze (2, 3, 4, 5) hermetisch und einzeln über seine gesamte Länge abgedichtet ist.

2. Vorgefertigtes Element nach Anspruch 1, wobei die Schienen einen T-förmigen transversalen Querschnitt aufweisen und wobei die Flansche des T-förmigen Querschnitts in die Stütze (1) aus Isoliermaterial eingebettet sind.

3. Vorgefertigtes Element nach Anspruch 1 oder 2, wobei die Stütze mit Befestigungsmitteln (9, 10, 11, 22, 23) versehen ist, um das vorgefertigte Element an einer externen Stütze zu befestigen.

4. Vorgefertigtes Element nach Anspruch 3, wobei die Befestigungsmittel wenigstens eine elastische Klemme (9, 10, 11) umfassen, die aus einem Stück mit der Isolierstütze (1) auf der Seite der Stütze gebildet ist, die gegenüber derjenigen Seite liegt, zu der sich die Schlitze für eine Einrastverbindung des vorgefertigten Elements mit einer externen Stütze öffnen.

5. Vorgefertigtes Element nach Anspruch 3, wobei die Befestigungsmittel ein Paar Flansche (22, 23) umfassen, die sich bezüglich der Stütze (1) lateral erstrecken, um das vorgefertigte Element an einer externen Stütze (26) zu befestigen.

6. Vorgefertigtes Element nach Anspruch 3, 4 oder 5, wobei sich die Befestigungsmittel mit Ausnahme der zwei Endabschnitte der Stütze über die gesamte Länge der Stütze (1) erstrecken.

7. Vorgefertigtes Element nach Anspruch 2, 3, 4, 5 oder 6, wobei die Leiterschienen (6) mit einem T-förmigen Querschnitt aus einer Platte gefalteten Metallmaterials bestehen.

8. Verfahren zum Herstellen eines vorgefertigten Leitungskanalelements gemäß einem der vorangehenden Ansprüche, umfassend die folgenden Schritte:
- Koextrusion der Stütze (1) und der Leitungsschienen (6),
- Wärmeverbinden des Blatts Isoliermaterial (7) mit der Seite der koextrudierten Stütze (1), zu der sich die Schlitze öffnen,
- Schneiden des koextrudierten Elements (1, 6) und des fest an der koextrudierten Stütze befestigten Blatts Isoliermaterial (7) in vorbestimmte Längen.

9. Verfahren zum Herstellen eines vorgefertigten Leitungskanalelements nach Anspruch 7, umfassend die folgenden Schritte:
- Rollbiegen einer Mehrzahl von Platten eines Metallmaterials - eine für jede Leiterschiene - zum Bilden der Schienen,
- Koextrusion der Stütze (1) und der Leitungsschienen (6),
- Wärmeverbinden des Blatts Isoliermaterial (7) mit der Seite der koextrudierten Stütze (1), zu der sich die Schlitze öffnen,
- Schneiden des koextrudierten Elements (1, 6) und des durch Wärmeverbindung an der koextrudierten Stütze befestigten Blatts Isoliermaterial (7) in vorbestimmte Längen.

10. Verfahren nach Anspruch 9, bei welchem dem Schritt des Rollbiegens der Mehrzahl von Platten ein Vorgang des Schneidens einer einzelnen Leiterplatte unter Verwendung von Rollschneidern vorangeht, um eine Mehrzahl von Platten zu erhalten.

## Revendications

1. Elément de conduit préfabriqué étanche pour la distribution de courant électrique comprenant un support (1) en matériau isolant formant une pluralité de fentes rectilignes (2, 3, 4, 5) qui sont parallèles entre elles et qui s'ouvrent sur un côté dudit support (1), une pluralité de barres conductrices (6), chacune logée dans l'une desdites fentes et fixée sur ledit support (1), une feuille (7) en matériau isolant perforable, espacée desdites barres (6), fermant lesdites fentes, **caractérisé en ce que** ladite feuille (7) est thermiquement reliée à la surface dudit support (1) sur laquelle lesdites fentes s'ouvrent, afin de fermer hermétiquement et individuellement chacune desdites fentes (2, 3, 4, 5) sur toute leur longueur.

2. Elément préfabriqué selon la revendication 1, dans lequel lesdites barres ont une section transversale en forme de T et les rebords de ladite section transversale en forme de T sont encastrés dans ledit support (1) en matériau isolant.

3. Elément préfabriqué selon les revendications 1 ou 2, dans lequel ledit support est prévu avec des moyens de fixation (9, 10, 11, 22, 23) pour fixer ledit élément préfabriqué sur un support externe.

4. Elément préfabriqué selon la revendication 3, dans lequel lesdits moyens de fixation comprennent au moins un dispositif de serrage élastique (9, 10, 11) formé d'un seul tenant avec ledit support isolant (1) sur le côté dudit support opposé à celui sur lequel lesdites fentes s'ouvrent pour un raccordement par encliquetage dudit élément préfabriqué sur un support externe.

5. Elément préfabriqué selon la revendication 3, dans lequel lesdits moyens de fixation comprennent une paire de rebords (22, 23) s'étendant latéralement par rapport audit support (1) pour fixer ledit élément préfabriqué sur un support externe (26).

6. Elément préfabriqué selon les revendications 3, 4 ou 5, dans lequel lesdits moyens de fixation s'étendent sur toute la longueur dudit support (1) excepté pour les deux parties d'extrémité dudit support.

7. Elément préfabriqué selon les revendications 2, 3, 4, 5 ou 6, dans lequel lesdites barres conductrices (6) ayant une section transversale en forme de T se composent d'une plaque en matériau métallique plié.

8. Procédé pour fabriquer un élément de conduit préfabriqué selon l'une quelconque des revendications précédentes, comprenant les étapes suivantes :
co-extrusion dudit support (1) et desdites barres conductrices (6),
liaison thermique de ladite feuille de matériau isolant (7) sur le côté dudit support co-extrudé (1) sur lequel lesdites fentes s'ouvrent,
découpe dudit élément co-extrudé (1, 6) et de ladite feuille de matériau isolant (7) fermement fixée audit support co-extrudé en longueurs prédéterminées.

9. Procédé pour fabriquer un élément de conduit préfabriqué selon la revendication 7, comprenant les étapes suivantes :
cintrage par rouleaux d'une pluralité de plaques de matériau métallique, l'une pour chaque barre conductrice, afin de former lesdites barres,
co-extrusion dudit support (1) et desdites barres conductrices (6),
liaison thermique de ladite feuille de matériau isolant (7) sur le côté dudit support (1) sur lequel lesdites fentes s'ouvrent,
découpe dudit élément co-extrudé (1, 6) et de ladite gaine de matériau isolant (7) thermiquement reliée audit support co-extrudé en longueurs prédéterminées.

10. Procédé selon la revendication 9, dans lequel ladite étape de cintrage par rouleaux de ladite pluralité de plaques, est précédée par une opération de découpe d'une seule plaque conductrice en utilisant des dispositifs de coupe à rouleaux afin d'obtenir ladite pluralité de plaques.
